# EUROPÄISCHE PATENTSCHRIFT

(11) **EP 1 830 071 B1**
(45) Veröffentlichungstag und Bekanntmachung des Hinweises auf die Patenterteilung: **30.12.2009**
(21) Anmeldenummer: 07004322.9
(22) Anmeldetag: 02.03.2007
(51) Int. Cl.: F04D 29/42, F04D 29/02

(54) **Kunstoffverdichtergehäuse**
Plastic compressor casing
Boîtier de compresseur en plastique

(30) Priorität: 03.03.2006 DE 102006010461
(43) Veröffentlichungstag der Anmeldung: 05.09.2007
(73) Patentinhaber: WOCO Industrietechnik GmbH, 63628 Bad Soden-Salmünster (DE); BorgWarner, Inc., Auburn Hills, MI 48326-2872 (US)
(72) Erfinder: Cvjeticanin, Nenad, 60320 Frankfurt (DE); Senftleben, Stephan, 63549 Ronneburg (DE); Münz, Stefan, Dr., 67067 Ludwigshafen (DE); Roemuss, Christiane, 67259 Beindersheim (DE)
(74) Vertreter: Weber-Bruls, Dorothée

(56) Entgegenhaltungen:
- EP-A- 1 674 671
- DE-A1- 10 054 855
- JP-A- 55 118 844
- JP-A- 55 118 845
- JP-A- 58 056 821
- US-A- 5 219 461
- US-A- 5 989 664
- HUNOLD D ET AL: "SCHLAU KOMBINIERT - WIRTSCHAFTLICH GEFERTIGT MEHRKOMPONENTEN-SPRITZGIESSEN VON THERMO- UND DUROPLASTEN" KUNSTSTOFFE, CARL HANSER VERLAG, MUNCHEN, DE, Bd. 91, Nr. 3, März 2001 (2001-03), Seiten 108-110, XP001039129 ISSN: 0023-5563

## Beschreibung

Die vorliegende Erfindung betrifft einen Verdichter mit einem Kunststoffgehäuse, insbesondere einen Radialverdichter, vorzugsweise einen Turbolader, wobei das Kunststoffgehäuse einen Duroplastkörper zur Bereitstellung von einem Ansaugstutzen, einem Verdichterkanal und einem Austrittsstutzen umfasst; sowie ein Verfahren zur Herstellung solch eines Kunststoffgehäuses eines Verdichters.

Im Stand der Technik sind gattungsgemäße Verdichter mit einem Kunststoffgehäuse gut bekannt. So ist beispielsweise in der DE 103 14 209 B3, die als nächstliegender Stand der Technik angesehen wird, ein Gehäuse für einen Radialverdichter beschrieben, das aus zwei Gehäuseteilen aus einem Duroplast gefertigt, insbesondere gespritzt, wird. In der DE 101 12 764A1 ist ein Radialverdichtergehäuse offenbart, das aus thermoplastischem Kunststoff besteht. Ein duroplastisches Kunststoffgehäuse weist den Nachteil auf, daß es insbesondere beim Einsatz in einem Turboladergehäuse im Falle eines Zerspringens eines Lüfterrades im Turboladergehäuse leicht zerstört werden kann, so daß nicht nur die Gefahr einer Beschädigung eines Kraftfahrzeugs, in dem der entsprechende Turbolader eingebaut ist, auftreten kann, sondern auch eine Person Verletzungen erleiden kann. Ein Thermoplastgehäuse hingegen ist nicht ausreichend stabil.

Weiterhin offenbart die US 5,219,461 eine Elastomereinlage für ein Pumpengehäuse. Die Elastomereinlage ist von einer glasfaserverstärkten, wärmehärtenden Kunststofflage umgeben.

Darüber hinaus ist es auf dem Gebiet von elektrischen Installationsgegenständen bekannt, eine Kombination von wärmehärtenden und thermoplastischen Materialien zu verwenden. So offenbart die JP 55 11 88 45A neben der JP 55 11 88 44 A ein Formungsverfahren zur Herstellung einer Buchse, die aus einer ersten Schale, die einen wärmehärtenden Kunststoff umfasst, und einer äußeren Schale, die aus thermoplastischem Kunststoff besteht, gebildet ist. Auch die DE 100 54 855 A1 offenbart ein elektrisches Installationsgerät. Bei diesem Installationsgerät ist eine Abdeckung zumindest zum Teil aus einem Duroplast und zum Teil aus einem Thermoplast gebildet.

Weiterhin offenbart die JP 580 56 82 1 ein Mehrschichtformungsverfahren, bei dem zuerst ein Artikel aus einem wärmehärtenden Kunststoff ausgeformt wird und anschließend ein thermoplastischer Kunststoff auf den so gefertigten Artikel auflaminiert wird.

Schließlich offenbart der Zeitschriftenartikel "Schlau kombiniert - wirtschaftlich gefertigt, Mehrkomponentenspritzgießen von Thermo- und Duroplasten", Kunststoffe, Karl Hanser Verlag, München, Band 91, Nummer 3, März 2001, Seiten 108 bis 110, ein Verfahren zur Kombination von Duroplastwerkstoffen zur Ausnutzung ihrer elektrischen Eigenschaften und Thermoplastwerkstoffen zur Ausnutzung ihrer Dichtungs- bzw. taktilen Eigenschaften.

Aufgabe der vorliegenden Erfindung ist es daher, dem gattungsgemäßen Verdichter derart weiterzuentwickeln, daß die Nachteile des Stands der Technik überwunden werden.

Diese Aufgabe wird erfindungsgemäß dadurch gelöst, daß ein Thermoplast zumindest teilweise den Duroplastkörper haubenartig überdeckt.

Dabei kann vorgesehen sein, daß der Duroplastkörper zumindest im Bereich des Ansaugstutzens und Verdichterkanals vollflächig überdeckt ist von dem Thermoplast.

Auch wird vorgesehen, daß der Duroplastkörper zur Aufnahme einer Verdichtergehäuserückwand, die vorzugsweise aus einem Metall ausgeformt ist, ein stufenartiges Ende aufweist.

Das Thermoplast kann sich dabei zum Bereitstellen einer Dichtlippe über das stufenartige Ende des Duroplastkörpers mit einer Verlängerung hinaus erstreckt, wobei die Verdichtergehäuserückwand vorzugsweise zwischen dem stufenartigen Ende des Duroplastkörpers und der Verlängerung des Thermoplasts einrastbar ist.

Ferner kann vorgesehen sein, daß der Duroplastkörper sich im Bereich des Ansaugstutzens zum freien Ende hin verjüngt, insbesondere durch Materialeinsparung an der Innenwand, wobei sich vorzugsweise das Duraplastende über den Thermoplast hinaus erstreckt oder das Thermoplast mit einer Verlängerung das Duraplastende umgreift.

Auch werden erfindungsgemäß Ausführungsformen vorgeschlagen, die gekennzeichnet sind durch zumindest ein Befestigungsmittel im Duroplastkörper, das vorzugsweise vom Thermoplast überdeckt ist, wenn es sich in Richtung der Verdichtergehäuserückwand öffnet, und/oder frei vom Thermoplast ist, wenn es sich von der Verdichtergehäuserückwand wegweisend öffnet.

Die Erfindung betrifft auch ein Verfahren zum Herstellen eines erfindungsgemäßen Kunststoffgehäuses eines Verdichters, das dadurch gekennzeichnet ist, daß der Duroplastkörpers als Grundkörper ausgeformt und anschließend der Grundkörper auf seiner Außenseite zumindest teilweise mit Thermoplast überdeckt wird.

Dabei ist bevorzugt, daß der Grundkörper einteilig hergestellt wird, vorzugsweise in einem Spritzverfahren, insbesondere in einem Spritzgießverfahren.

Erfindungsgemäß kann auch vorgesehen sein, daß der Thermoplast auf den Grundkörper aufgespritzt wird, insbesondere in einem Spritzgießverfahren oder aufgeklipst wird.

Weiterhin kann vorgesehen sein, daß als Thermoplast ein hochzähes Thermoplast ausgewählt ist.

Schließlich wird erfindungsgemäß vorgeschlagen, daß ein Zwei-Komponenten-Kunststoffverdichtergehäuse für einen Turbolader hergestellt wird.

Der Erfindung liegt somit die überraschende Erkenntnis zugrunde, daß beispielsweise ein Turboladergehäuse, insbesondere einteilig, aus einem Duroplastgrundkörper gefertigt sein kann, der mit einem, insbesondere hochzähen, Thermoplast umspritzt ist oder auf den solch ein Thermoplast aufgeklipst ist, so daß der Duroplastgrundkörper haubenartig von dem Thermoplast zum Schutze überdeckt wird, wodurch selbst im Falle eines Zerberstens des Duroplastgrundkörpers, beispielsweise aufgrund eines Zerspringens eines Lüfterrades im Turboladergehäuse, freiwerdende Energie von der Thermoplasthaube aufgenommen werden kann, um sowohl eine Beschädigung eines Kraftfahrzeuges als auch eine Verletzungsgefahr einer Person zu reduzieren, während im Normalbetrieb der Duroplastgrundkörper die Stabilität des Turboladergehäuses sichert.

Weitere Merkmale und Vorteile der Erfindung ergeben sich aus der nachfolgenden Beschreibung, in der Ausführungsbeispiele der Erfindung anhand einer schematischen Zeichnung beispielhaft erläutert ist. Dabei zeigt:
- Figur 1a: eine perspektivische Teilschnittansicht durch ein erstes erfindungsgemäßes Turboladergehäuse;
- Figur 1b: eine Schnittansicht durch das in Figur 1a gezeigte Turboladergehäuse;
- Figur 2a: eine perspektivische Ansicht eines zweiten erfindungsgemäßen Turboladerge- häuses;
- Figur 2b: eine Seitenansicht des in Figur 2a gezeigten Turboladergehäuses;
- Figur 2c: eine Schnittansicht durch das in Figur 2b gezeigte Turboladergehäuse entlang der Linie A-A;
- Figur 3a: eine Draufsicht auf ein drittes erfindungsgemäßes Turboladergehäuse; und
- Figur 3b: eine Teilschnittansicht durch das in Figur 3a gezeigte Turboladergehäuse längs der Linie B-B.

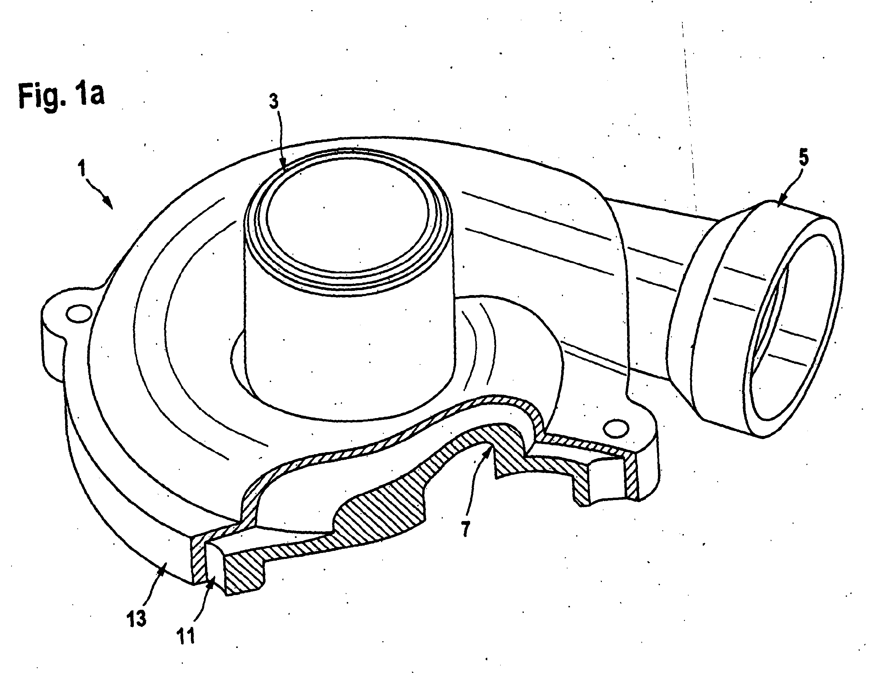

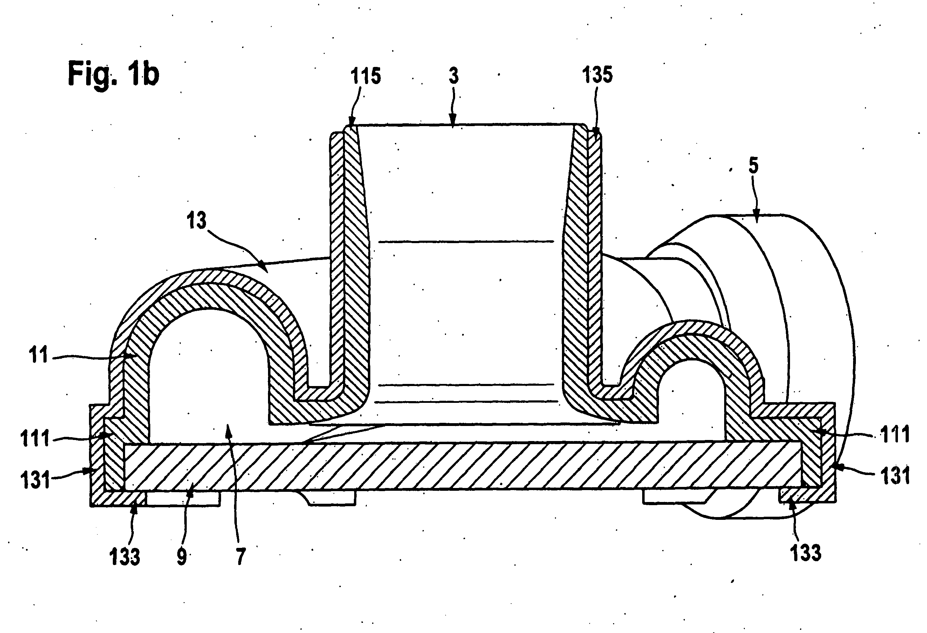

Wie den Figuren 1a und 1b zu entnehmen ist, umfaßt ein erstes erfindungsgemäßes Turboladergehäuse 1 einen Luftansaugstutzen 3 und einen Luftaustrittsstutzen 5, zwischen denen ein spiralförmiger Verdichterkanal 7 angeordnet ist. Der Verdichterkanal 7 ist durch eine Verdichtergehäuserückwand 9 verschlossen.

Dieses Turboladergehäuse 1 umfaßt seinerseits einen Duroplastgrundkörper 11 und eine Thermoplasthaube 13 und stellt somit ein Zwei-Komponenten-Kunststoffgehäuse dar. Zum Erhalten dieser Struktur wird zuerst der Duroplastgrundkörper 11 in einem Spritzgießverfahren hergestellt und dann auf seine Außenfläche zumindest teilweise ein vorzugsweise hochzähes Thermoplast aufgespritzt.

Wie insbesondere Figur 1b zu entnehmen ist, ist die Verdichtergehäuserückwand 9 zwischen einer Stufe 111 des Duroplastgrundkörpers 11 und einer Verlängerung 133 der Thermoplasthaube 13 eingerastet. Zu diesem Zwecke weist nicht nur der Duroplastgrundkörper 11 die Stufe 111 auf, sondern auch die Thermoplasthaube 13 eine Stufe 131, von der sich dann die Verlängerung 133 lippenartig wegerstreckt, und zwar radial nach innen. Diese Konstruktion erleichtert die Montage und erhöht weiterhin die Sicherheit.

Ferner ist Figur 1b zu entnehmen, daß im Bereich des Luftansaugstutzens 3 der Duroplastgrundkörper 11 ein sich konisch verjüngendes Ende 115 durch Materialeinsparung an seiner Innenwand aufweist, wobei sich dieses Ende 115 über das konzentrisch dazu angeordnete Ende 135 der Thermoplasthaube 13 erstreckt.

Den Figuren 1a und 1b ist auch zu entnehmen, daß der Luftaustrittsstutzen 5 lediglich durch den Duroplastgrundkörper 11 bereitgestellt ist, ohne eine Thermoplasthaube 13. In diesem Bereich ist die durch die Thermoplasthaube 13 bereitgestellte Funktion nicht notwendig, so daß dort auf ein Aufspritzen von Thermoplast verzichtet werden kann. Die Thermoplasthaube 13 stellt also eine Schutzhülle des Duroplastgrundkörpers 11 im Bereich des Verdichterkanals 7 sowie des Luftansaugstutzens 3 dar.

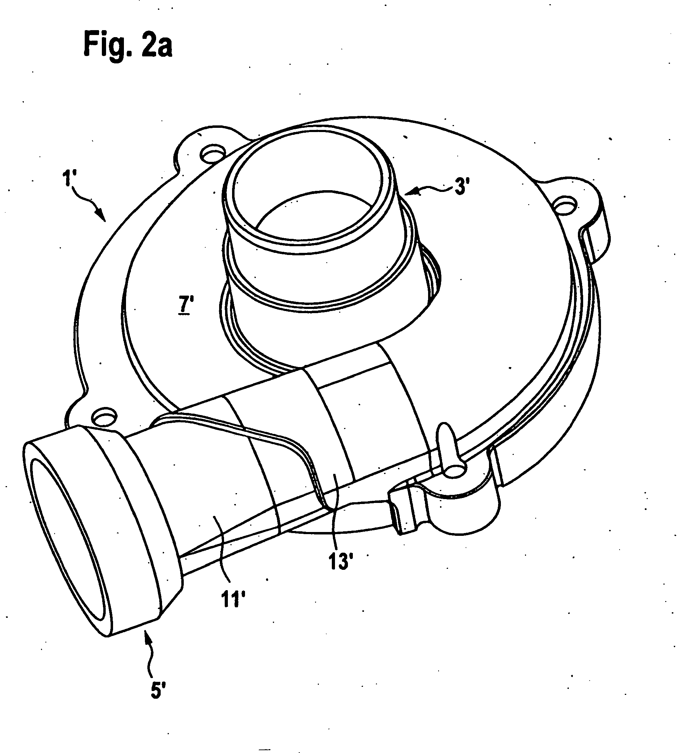

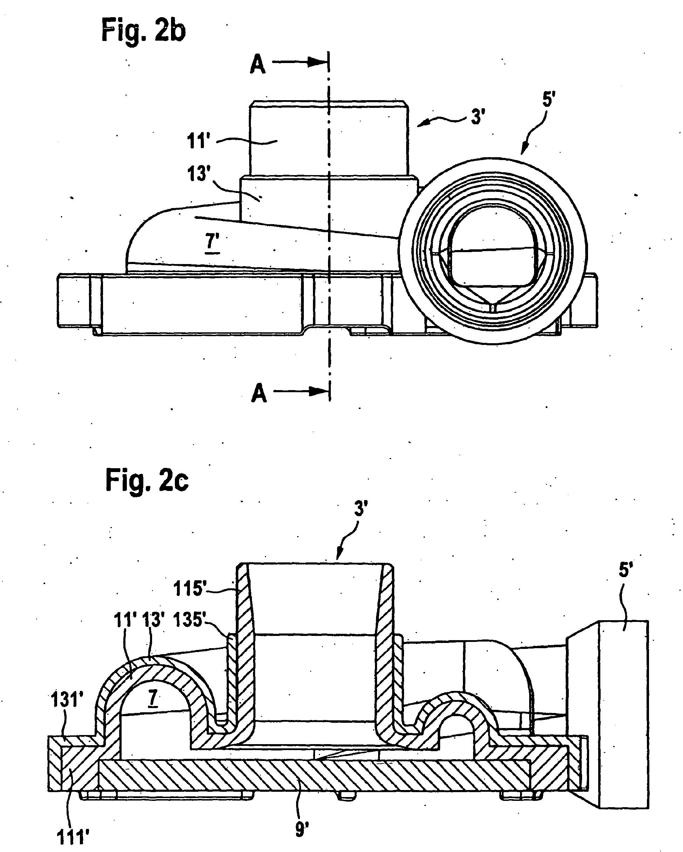

In den Figuren 2a bis 2c ist ein zweites erfindungsgemäßes Turboladergehäuse 1' mit seinem Luftansaugstutzen 3', Luftaustrittsstutzen 5' und Verdichterkanal 7' in Wirkverbindung mit einer Verdichtergehäuserückwand 9' gezeigt. Auch bei diesem Ausführungsbeispiel ist ein Duroplastgrundkörper 11' mit einer Thermoplasthaube 13' ausgerüstet, wobei hier die Thermoplasthaube 13' auf den Duroplastkörper 11' aufgeklipst ist. Im Bereich der Aufnahme der Verdichtergehäuserückwand 9' weist der Duroplastkörper 11' eine Stufe 111' auf, ebenso wie die Thermoplasthaube 13' eine Stufe 131' aufweist. Auch ist das Ende 115' des Duroplastkörpers 11' im Bereich des Luftansaugstutzens 3' konisch ausgeformt und im Bereich seiner konischen Konfiguration nicht von der Thermoplasthaube 13' überdeckt. Das Ende 135' der Thermoplasthaube 13' endet also vor der konischen Verjüngung des Endes 115'.

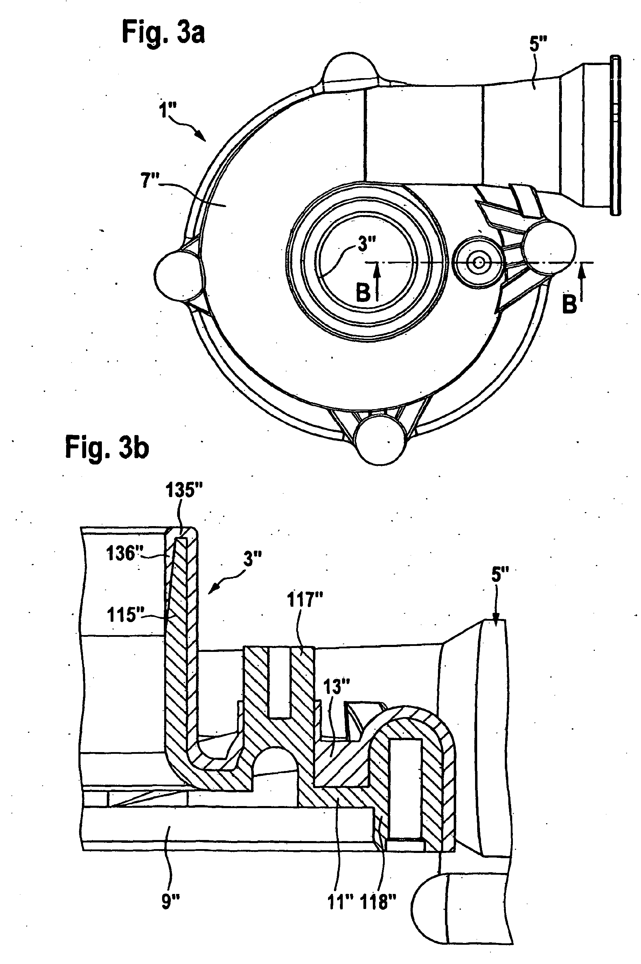

Ein drittes erfindungsgemäßes Turboladergehäuse 1" ist in den Figuren 3a und 3b dargestellt und weist wiederum einen Luftansaugstutzen 3", einem Luftaustrittsstutzen 5" einen Verdichterkanal 7" und eine Verdichtergehäuserückwand 9" auf. Wiederum ist das Turboladergehäuse 1" aus einem Duroplastgrundkörper 11 " mit einer darauf aufgesteckten Thermoplasthaube 13" aufgebaut. Die Thermoplasthaube 13" überdeckt den Duroplastgrundkörper 11' abgesehen von dem freien Ende des Luftaustrittstutzens 5" und im Bereich eines Befestigungsmittels 117". Insbesondere überdeckt die Thermoplasthaube 13' den Duroplastgrundkörper 11" im Bereich eines sich konisch verjüngenden Endes 115" des Luftansaugstutzens 3" mit seinem Ende 135" samt Verlängerung 136". Auch überdeckt die Thermoplasthaube 13" den Duroplastgrundkörper 11' im Bereich eines zweiten Befestigungsmittels 118", das sich, im Gegensatz zu dem ersten Befestigungsmittel 117" zur Verdichtergehäuserückwand 9" öffnet.

Die in der voranstehenden Beschreibung, der Zeichnung sowie den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verdichter mit einem Kunststoffgehäuse (1, 1', 1"), wobei das Kunststoffgehäuse (1, 1', 1'') zumindest einen Duroplastkörper (11, 11', 11 ") zur Bereitstellung von einem Ansaugstutzen (3, 3', 3"), einem Verdichterkanal (7, 7', 7") und einem Austrittsstutzen (5, 5', 5 ") umfasst, **dadurch gekennzeichnet, daß**
ein Thermoplast (13, 13', 13") zumindest teilweise den Duroplastkörper (11, 11', 11 ") haubenartig überdeckt.

2. Verdichter nach Anspruch 1, **dadurch gekennzeichnet, daß**
der Verdichter in Form eines Radialverdichters, vorzugsweise für den Einsatz in einem Turbolader, ausgebildet ist.

3. Verdichter nach Anspruch 1 oder 2, **dadurch gekennzeichnet, daß**
der Duroplastkörper (11, 11', 11") zumindest im Bereich des Ansaugstutzens (3, 3") und/oder des Verdichterkanals (7, 7') vollflächig überdeckt ist von dem Thermoplast (13, 13', 13").

4. Verdichter nach einem der vorangehenden Ansprüche, **dadurch gekennzeichnet, daß**
der Duroplastkörper (11, 11', 11") zur Aufnahme einer Verdichtergehäuserückwand (9, 9', 9"), die vorzugsweise aus einem Metall ausgeformt ist, ein stufenartiges Ende (111, 111', 111 ") aufweist.

5. Verdichter nach Anspruch 4, **dadurch gekennzeichnet, daß**
das Thermoplast (13) sich zum Bereitstellen einer Dichtlippe über das stufenartige Ende (111) des Duroplastkörpers (11) mit einer Verlängerung (133) hinaus erstreckt.

6. Verdichter nach Anspruch 5, **dadurch gekennzeichnet, daß**
die Verdichtergehäuserückwand (9) zwischen dem stufenartigen Ende (111) des Duroplastkörpers (11) und der Verlängerung (133) des Thermoplasts (13) einrastbar ist.

7. Verdichter nach einem der vorangehenden Ansprüche, **dadurch gekennzeichnet, daß**
der Duroplastkörper (11, 11', 11") sich im Bereich des Ansaugstutzens (3, 3', 3") zum freien Ende (115, 115', 115") hin verjüngt, insbesondere durch Materialeinsparung an der Innenwand.

8. Verdichter nach Anspruch 7, **dadurch gekennzeichnet, daß**
sich das Duroplastende (115, 115') über den Thermoplast (13, 13') hinaus erstreckt oder das Thermoplast (13") mit einer Verlängerung (136") das Duroplastende (115") umgreift.

9. Verdichter nach einem der vorangehenden Ansprüche, **gekennzeichnet durch** zumindest ein Befestigungsmittel (117", 118") im Duroplastkörper (11")

10. Verdichter nach Anspruch 9, **dadurch gekennzeichnet, daß**
das Befestigungsmittel (117", 118") vom Thermoplast (13") überdeckt ist, wenn es sich in Richtung der Verdichtergehäuserückwand (9") öffnet, und/oder frei vom Thermoplast (13") ist, wenn es sich von der Verdichtergehäuserückwand (9") wegweisend öffnet.

11. Verfahren zum Herstellen eines Kunststoffgehäuses eines Verdichters nach einem der vorangehenden Ansprüche, **dadurch gekennzeichnet, daß**
der Duroplastkörper als Grundkörper ausgeformt und anschließend der Grundkörper auf seiner Außenseite zumindest teilweise mit Thermoplast überdeckt wird.

12. Verfahren nach Anspruch 11, **dadurch gekennzeichnet, daß**
der Grundkörper einteilig hergestellt wird, vorzugsweise in einem Spritzverfahren, insbesondere in einem Spritzgießverfahren.

13. Verfahren nach Anspruch 11 oder 12, **dadurch gekennzeichnet, daß**
der Thermoplast auf den Grundkörper aufgespritzt wird, insbesondere in einem Spritzgießverfahren, oder aufgeklipst wird.

14. Verfahren nach einem der Ansprüche 11 bis 13, **dadurch gekennzeichnet, daß** als Thermoplast ein hochzähes Thermoplast ausgewählt ist.

15. Verfahren nach einem der Ansprüche 11 bis 14, **dadurch gekennzeichnet, daß** ein Zwei-Komponenten-Kunststoffgehäuse für einen Turbolader hergestellt wird.

## Claims

1. A compressor with a plastic casing (1, 1', 1 "), wherein the plastic casing (1, 1', 1") comprises at least one thermosetting plastic body (11, 11', 11 ") for providing an intake port (3, 3', 3"), a compressor duct (7, 7', 7") and an outlet port (5, 5', 5"), **characterized in that**
a thermoplastic (13, 13', 13") at least partially covers the thermosetting plastic body (11, 11', 11 ") like a hood.

2. A compressor according to claim 1, **characterized in that**
the compressor is designed as a radial flow compressor, preferably for use in a turbocharger.

3. A compressor according to claim 1 or 2, **characterized in that**
the thermoplastic (13, 13', 13") covers the full surface of the thermosetting plastic body (11, 11', 11") at least in the region of the intake port (3, 3") and/or of the compressor duct (7, 7').

4. A compressor according to any one of the preceding claims, **characterized in that**
the thermosetting plastic body (11, 11', 11") has a stepped end (111, 111', 111") for receiving a compressor-casing back panel (9, 9', 9"), which compressor-casing back panel (9, 9', 9") is preferably formed of a metal.

5. A compressor according to claim 4, **characterized in that**
for providing a sealing lip, the thermoplastic (13) extends with an extension (133) beyond the stepped end (111) of the thermosetting plastic body (11).

6. A compressor according to claim 5, **characterized in that**
the compressor-casing back panel (9) can be locked into place between the stepped end (111) of the thermosetting plastic body (11) and the extension (133) of the thermoplastic (13).

7. A compressor according to any one of the preceding claims, **characterized in that**
the thermosetting plastic body (11, 11', 11") tapers in the region of the intake port (3, 3', 3 ") towards the free end (115, 115', 115"), particularly because of inside-wall material saving.

8. A compressor according to claim 7, **characterized in that**
the thermosetting plastic end (115, 115') extends beyond the thermoplastic (13, 13'), or the thermoplastic (13") encompasses the thermosetting plastic end (115") with an extension (136").

9. A compressor according to any one of the preceding claims, **characterized by** at least one fastening means (117", 118") in the thermosetting plastic body (11").

10. A compressor according to claim 9, **characterized in that**
the fastening means (117", 118") is covered by the thermoplastic (13") when it opens towards the compressor-casing back panel (9"), and/or is free from the thermoplastic (13") when it opens in a direction away from the compressor-casing back panel (9").

11. A method for manufacturing a plastic casing of a compressor according to any one of the preceding claims, **characterized in that**
the thermosetting plastic body is formed as a basic body and the basic body is subsequently covered on its outside with thermoplastic at least partially.

12. A method according to claim 11, **characterized in that**
the basic body is manufactured as one piece, preferably in an injection process, particularly in an injection-moulding process.

13. A method according to claim 11 or 12, **characterized in that**
the thermoplastic is injection-moulded on the basic body, particularly in an injection-moulding process, or is clipped thereon.

14. A method according to any one of claims 11 to 13, **characterized in that**
a highly tough thermoplastic is selected as the thermoplastic.

15. A method according to any one of claims 11 to 14, **characterized in that**
a two-component plastic casing for a turbocharger is manufactured.

## Revendications

1. Compresseur avec un carter (1, 1', 1") en matière plastique, le carter (1, 1', 1") en matière plastique comprenant au moins un corps (11, 11', 11") en matière plastique thermodurcissable destiné à fournir un raccord d'aspiration (3, 3', 3"), un canal de compresseur (7, 7', 7") et un raccord de sortie (5, 5', 5"), **caractérisé en ce que**
une matière thermoplastique (13, 13', 13") recouvre au moins partiellement le corps (11, 11', 11") en matière plastique thermodurcissable à la manière d'un capot.

2. Compresseur selon la revendication 1, **caractérisé en ce que**
le compresseur est réalisé sous la forme d'un compresseur radial, de préférence pour l'utilisation dans un turbocompresseur.

3. Compresseur selon la revendication 1 ou 2, **caractérisé en ce que**
le corps (11, 11', 11") en matière plastique thermodurcissable est recouvert de manière contiguë par la matière thermoplastique (13, 13', 13") au moins dans le secteur du raccord d'aspiration (3, 3") et/ou du canal de compresseur (7, 7').

4. Compresseur selon l'une quelconque des revendications précédentes, **caractérisé en ce que**
le corps (11, 11', 11") en matière plastique thermodurcissable destiné à recevoir une paroi arrière (9, 9', 9") de carter de compresseur, qui est de préférence en métal moulé, présente une extrémité (111, 111', 111 ") étagée.

5. Compresseur selon la revendication 4, **caractérisé en ce que**
la matière thermoplastique (13) s'étend avec un prolongement (133) afin de fournir une lèvre d'étanchéité par-dessus l'extrémité étagée (111) du corps (11) en matière plastique thermodurcissable.

6. Compresseur selon la revendication 5, **caractérisé en ce que**
la paroi arrière (9) de carter de compresseur peut être enclenchée entre l'extrémité étagée (111) du corps (11) en matière plastique thermodurcissable et le prolongement (133) de la matière thermoplastique (13).

7. Compresseur selon l'une quelconque des revendications précédentes, **caractérisé en ce que**
le corps (11, 11', 11") en matière plastique thermodurcissable converge dans le secteur du raccord d'aspiration (3, 3', 3") vers les extrémités libres (115, 115', 115"), en particulier grâce à une économie de matériau au niveau de la paroi intérieure.

8. Compresseur selon la revendication 7, **caractérisé en ce que**
les extrémités (115, 115') en matière plastique thermodurcissable s'étendent vers l'extérieur par-dessus la matière thermoplastique (13, 13') ou la matière thermoplastique (13") entoure l'extrémité (115") en matière plastique thermodurcissable avec un prolongement (136").

9. Compresseur selon l'une quelconque des revendications précédentes, **caractérisé par**
au moins un moyen de fixation (117", 118") dans le corps (11") en matière plastique thermodurcissable.

10. Compresseur selon la revendication 9, **caractérisé en ce que**
le moyen de fixation (117", 118") est recouvert par la matière thermoplastique (13") quand il s'ouvre en direction de la paroi arrière (9") de carter de compresseur, et/ou est exempt de matière thermoplastique (13") quand il s'ouvre de manière directrice depuis la paroi arrière (9") du carter de compresseur.

11. Procédé de fabrication d'un carter en matière plastique d'un compresseur selon l'une quelconque des revendications précédentes, **caractérisé en ce que**
le corps en matière plastique thermodurcissable est moulé en tant que corps de base et le corps de base est ensuite recouvert sur sa face extérieure au moins partiellement avec de la matière thermoplastique.

12. Procédé selon la revendication 11, **caractérisé en ce que**
le corps de base est fabriqué en une seule pièce, de préférence selon un procédé d'injection, en particulier selon un procédé de moulage par injection.

13. Procédé selon la revendication 11 ou 12, **caractérisé en ce que**
la matière thermoplastique est injectée sur le corps de base, en particulier selon un procédé de moulage par injection, ou est fixée dessus par clipsage.

14. Procédé selon l'une quelconque des revendications 11 à 13, **caractérisé en ce que**
une matière thermoplastique à résistance élevée aux chocs est choisie en tant que matière thermoplastique.

15. Procédé selon l'une quelconque des revendications 11 à 14, **caractérisé en ce que**
un carter en matière plastique à deux composants pour un turbocompresseur est fabriqué.
